# FASCICULE DE BREVET EUROPEEN

(11) **EP 3 932 794 B1**
(45) Date de publication et mention de la délivrance du brevet: **24.04.2024**
(21) Numéro de dépôt: 21181524.6
(22) Date de dépôt: 24.06.2021
(51) Int. Cl.: B62M 6/90, B62K 19/30, B62H 5/00, B62J 6/04, B62J 43/13, B62J 43/28, B62K 3/04, B62K 19/12, B62K 19/28, B62K 19/36, B62K 19/40, B62M 6/55

(54) **PROCÉDÉ DE FABRICATION ET PIÈCE POUR CADRE POUR VÉLO À ASSISTANCE ÉLECTRIQUE**
HERSTELLUNGSVERFAHREN UND ZUBEHÖRTEIL FÜR RAHMEN EINES FAHRRADS MIT ELEKTRISCHER ANTRIEBSUNTERSTÜTZUNG
METHOD OF MANIFACTURING AND PART FOR POWER-ASSISTED BICYCLE FRAME

(30) Priorité: 29.06.2020 BE 202005483
(43) Date de publication de la demande: 05.01.2022
(73) Titulaire: E2 Drives, 1332 Genval (BE)
(72) Inventeur: DELEVAL, Arthur, 1332 Genval (BE); DELEVAL, Christophe, 1332 Genval (BE)
(74) Mandataire: Gevers Patents

(56) Documents cités:
- EP-A1- 0 079 616
- EP-A1- 3 587 233
- EP-B1- 2 230 164
- CN-U- 205 499 234
- DE-A1-102015 012 734
- DE-A1-102018 116 094
- DE-U1-202016 104 758
- DE-U1-202018 004 175
- DE-U1-202018 005 476
- DE-U1-202018 103 740
- US-A1- 2014 191 492

## Description

### Domaine technique

La présente invention concerne notamment, un procédé de fabrication d'une pièce pour cadre pour vélo à assistance électrique, une pièce pour cadre pour vélo à assistance électrique et un cadre comprenant ladite pièce.

### Art antérieur

Actuellement, de plus en plus de composants électroniques et mécaniques sont intégrés dans le cadre du vélo. Le fait d'intégrer des composants à l'intérieur du cadre donne un avantage esthétique considérable car les composants sont cachés ce qui donne un aspect plus propre au vélo.

Cependant, aujourd'hui, la plupart des cadres de vélo sont constitués de tubes soudés, et placer des composants dans de tels cadre peut être très complexe. Il faut notamment guider tous ces éléments à travers les tubes et éviter d'endommager les câbles et les composants aux jonctions du cadre. De plus, maintenir ces composants en place dans les tubes peut être aussi complexe. En effet, ils peuvent rarement être fixés directement au cadre, ce qui requiert donc d'avoir des pièces de fixations intermédiaires.

Pour les vélos électriques, l'effort d'intégration doit aussi être appliqué à la batterie. Aujourd'hui plusieurs solutions différentes existent pour placer une batterie sur un vélo électrique. On retrouve notamment des batteries accrochées au porte-bagages, fixées sur un tube du cadre, ou encore placées à l'intérieur du cadre. Dans ce dernier cas de figure, certains font le choix d'avoir une batterie inamovible, ce qui simplifie la conception, et d'autres préfèrent un système plus complexe de batterie amovible. Dans ce dernier cas, il est connu du document EP2653371A1 d'utiliser des profils extrudés à double paroi pour intégrer la batterie sans fragiliser le cadre.

Chacun des systèmes de placement de batterie listés ci-dessus a ses inconvénients. La batterie sur le porte-bagage déplace le centre de gravité du vélo vers l'arrière du vélo et est potentielle une charge sur le porte bagage. Placer la batterie directement sur un tube pose des problèmes d'esthétisme. Concernant la solution d'avoir une batterie amovible intégrée dans un des tubes du cadre, souvent, une pièce supplémentaire est utilisée pour refermer le cadre en recouvrant la batterie, comme décrit dans le document DE202019106361U1. La pose de cette pièce supplémentaire n'est pas toujours aisée en raison du type de fixation ou de la disposition du cadre. De plus, les tubes extrudés à double paroi nécessaires à ce type de fixations sont complexes et demandent des coûts supplémentaires de fabrication du cadre. De plus, généralement le procédé d'insertion et d'extraction de la batterie ne sont toujours faciles et intuitifs pour les utilisateurs. Pour les batteries inamovibles, le problème est de devoir déplacer son vélo en entier pour charger la batterie.

Un autre défaut avec les cadres de vélos fabriqués en tubes soudés est le procédé même de fabrication. Produire les tubes, les couper aux dimensions requises, les souder et, dans certains cas, polir les soudures prend beaucoup de temps et peut difficilement être automatisé. Cela rend la fabrication de ses cadres lente et relativement onéreuse. C'est pourquoi d'autres méthodes de fabrication de cadres ont été proposées. Par exemple, celle décrite dans EP0216840A1 propose un cadre fait de pièces moulées en magnésium. Cependant de cadre est formé de plusieurs pièces et nécessité donc aussi un assemblage complexe.

Le document DE 10 2018 116094 A1 décrit un élément de châssis pour vélo électrique avec un trou pour insérer latéralement la batterie. DE 10 2018 116094 A1 divulgue le préambule des revendications 1 et 5.

### Résumé de l'invention

L'invention décrite ici vise adresser les différents problèmes mentionnés précédemment.

A cet effet, l'invention propose un procédé de fabrication d'une pièce pour cadre pour vélo à assistance électrique équipé d'un groupe motopropulseur incluant un axe de pédalier, la pièce ayant un premier côté et un deuxième côté opposé au premier côté, la pièce étant une première partie, moulée d'une pièce, dudit cadre, et qui comprend au moins:
- un premier passage prévu pour être traversé par un tube de selle,
- un deuxième passage prévu pour être traversé par un tube de direction,
- une partie d'interface avec le groupe motopropulseur, et
- une première cavité ouverte sur au moins un des côtés de la pièce et prévue pour recevoir au moins partiellement une batterie pour alimenter le groupe motopropulseur ;
dans lequel le procédé de fabrication est un procédé de moulage par injection métallique, et la pièce est moulée d'une pièce et a une partie de paroi ayant une épaisseur de moins de 4 mm.

Le procédé selon l'invention utilise la technologie de moulage par injection métallique (die-casting en anglais) qui permet de former des parois métalliques minces de façon particulièrement fiable et reproductible. La minceur des parois permet de diminuer la quantité de matière nécessaire et donc le poids de la pièce.

Une pièce selon l'invention est une pièce pour cadre pour vélo à assistance électrique équipé d'un groupe motopropulseur incluant un axe de pédalier, la pièce ayant un premier côté et un deuxième côté opposé au premier côté, la pièce étant une première partie, moulée d'une pièce, dudit cadre, et qui comprend au moins:
- un premier passage prévu pour être traversé par un tube de selle,
- un deuxième passage prévu pour être traversé par un tube de direction,
- une partie d'interface avec le groupe motopropulseur, et
- une première cavité ouverte sur au moins un des côtés de la pièce et prévue pour recevoir au moins partiellement une batterie pour alimenter le groupe motopropulseur ;
la pièce étant moulée d'une pièce et comprenant une partie de paroi ayant une épaisseur de moins de 4 mm.

La pièce est une première partie du cadre et en fournit la structure mécanique. Une deuxième partie du cadre forme un couvercle latéral de la première partie. Ce cadre concerne un vélo à assistance électrique et relie entre le tube de selle, le tube de direction et le groupe motopropulseur. La batterie est intégrée latéralement de manière esthétique dans le cadre, sans utilisation de pièce de cadre supplémentaire.

L'invention permet d'obtenir un cadre de vélo conçu dans l'optique de fortement diminuer le cout de production d'un vélo à assistance électrique avec composants intégrés en gardant de la liberté pour le design extérieur.

Le premier aspect de la réduction de cout provient de la méthode de fabrication de la pièce qui forme la première partie du cadre. Le cadre comprend au moins deux parties : une première, structurante qui relie la direction, le tube de selle et la transmission, préférentiellement faite en une pièce d'alliage métallique (aluminium ou magnésium par exemple) et une deuxième, non structurante, qui peut être faite en n'importe quel matériau, qui se fixe à la première partie pour venir refermer le premier côté du cadre, sauf au niveau de la première cavité. La première partie est dessinée pour être moulée par un procédé de die-casting qui garantit des prix de production très faibles à l'unité une fois que beaucoup d'exemplaires sont produits. Une fois sortie du moule, la première partie peut avoir besoin de légères rectifications avant d'être prête à l'emploi mais ne nécessite pas ou peu de soudure d'éléments structurels.

Le deuxième aspect de réduction de cout vient de l'intégration de multiples fonctionnalités directement dans la structure du cadre, rendant la fabrication du vélo plus rapide. La première partie peut, de par sa conception en une pièce, sans soudure et sans apport de nombreuses pièces de fixations structurelles, accueillir et fixer beaucoup de composants tels que les roulements de direction, différentes composants électroniques, une batterie et son système d'antivol, un tube de selle et son système de réglage de hauteur, des phares, le groupe motopropulseur,... De plus, cette forme ouverte de la première partie permet encore le passage des gaines de freins et divers fils électriques. Le fait que ces fonctionnalités fassent partie intégrante de la première partie du cadre élimine le cout de production et d'installation des pièces d'interfaces qui auraient été nécessaires pour avoir ces mêmes composants dans un cadre fait de tubes soudés.

Il est intéressant de noter que la pièce n'est pas totalement ouverte latéralement. En effet, le premier et le deuxième passages sont fermés latéralement, ce qui permet de particulièrement sécuriser la fixation du tube de selle et du tube de direction. Comme le premier et le deuxième passages sont ouverts sur le dessus et le dessous, leur fermeture latérale ne complique pas le procédé de moulage.

La forme de la première cavité est préférentiellement prévue pour guider de la batterie. Par exemple, elle peut inclure une protubérance prévue pour faire pivoter la batterie vers l'intérieur. Elle a préférentiellement une forme aidant au coulissement de la batterie vers le bas, et/ou permettant de replier une poignée de la batterie à l'intérieur de la première cavité.

La partie de paroi ayant une épaisseur de moins de 4 mm peut être n'importe où sur la pièce, par exemple sur une paroi de fond de la première cavité, sur une nervure et/ou sur une partie supérieure reliant le premier passage et le deuxième passage. La pièce comprend préférentiellement plusieurs parties de paroi d'épaisseur de moins de 4 mm.

Selon un mode de réalisation, l'épaisseur de la ou les partie(s) de paroi est de moins de 3 mm. Plus préférentiellement, elle est de moins de 2 mm.

Selon un mode de réalisation, la pièce comprend une paroi de fond fermant, au moins partiellement, la première cavité du deuxième côté. Une telle paroi de fond permet de particulièrement bien bloquer la batterie. Elle peut comprendre des trous.

Selon un mode de réalisation, le moulage par injection est réalisé avec une pression d'au moins 10 MPa.

Selon un mode de réalisation, la première cavité est agencée pour permette une insertion latérale de la batterie. La batterie amovible peut ainsi être insérée latéralement dans la première cavité. La première cavité est préférentiellement ouverte sur le premier côté de la pièce. La béquille du vélo est préférentiellement du deuxième côté de la pièce, ce qui permet que la première cavité ait son ouverture vers le haut afin de faciliter l'insertion de la batterie.

Selon un mode de réalisation, la pièce comprend des cavités débouchant sur le deuxième côté. Ainsi, le placement tous les composants décrits ici plus haut devient très facile. Il y a un accès direct et non obstrué à toutes les parties du cadre, ce qui facilite le travail par rapport à un guidage des composants à travers des tubes fermés.

Selon un mode de réalisation, la première partie comprend des nervures agencées pour en augmenter la rigidité. Les nervures séparent les cavités.

Selon un mode de réalisation, la pièce a, au moins localement, un profil en C, en T ou en H. Le profil est une coupe selon un plan qui est perpendiculaire à la direction de mouvement du vélo.

La pièce est préférentiellement en alliage métallique, par exemple en alliage d'aluminium. Le métal est typiquement moins cher qu'un matériau composite par exemple. Il est aussi très résistant, présente un aspect qualitatif et est recyclable.

Selon un mode de réalisation, la première partie est traversée latéralement par une cavité avant et/ou par une cavité arrière. Les cavités avant et arrière permettent de diminuer le poids du cadre.

Selon un mode de réalisation, la première partie comprend un trou agencé pour faciliter un passage d'ondes électromagnétiques (GPS, GSM, Bluetooth ou autre) vers des composants électroniques situés dans le cadre.

L'invention propose aussi un cadre comprenant ladite pièce formant sa première partie, et une deuxième partie agencée pour fermer au moins partiellement, la première partie sur le deuxième côté. Le premier (respectivement deuxième) côté de la pièce est aussi le premier (respectivement deuxième) côté du cadre. La deuxième partie est préférentiellement, mais pas obligatoirement, en une seule pièce. Elle a notamment une fonction esthétique car la structure mécanique du cadre est apportée par la première partie.

Selon un premier mode de réalisation du cadre, la première partie forme le premier côté du cadre. Le cadre de vélo est asymétrique. La première partie forme une coque creuse ouverte sur le côté et préférentiellement nervurée pour augmenter sa robustesse. La pièce a un profil en « C » dont la partie intérieure est utilisée pour placer des composants et des nervures et dont la partie extérieure peut être modifiée pour répondre à des considérations esthétiques.

Selon un deuxième mode de réalisation du cadre, le cadre comprend une troisième partie formant le premier côté du cadre, et la deuxième partie forme un deuxième côté du cadre. Ainsi, deux parties non-structurantes sont fixées de part et d'autre de la première partie. La première partie est préférentiellement symétrique. Le profil de la pièce est alors préférentiellement soit en « T », soit en « H » pour maintenir la rigidité.

Selon un troisième mode de réalisation du cadre, la deuxième partie forme le premier et le deuxième côté du cadre. Le profil de la pièce est alors préférentiellement en « T ».

Selon un mode de réalisation, le cadre comprend une protubérance située dans la première cavité et prévue pour s'insérer dans une encoche de la batterie de façon à faire pivoter la batterie vers l'intérieur de la première cavité. La protubérance est préférentiellement située sur une surface intérieure de la première cavité. L'inverse est aussi possible : la protubérance peut être sur la batterie, et l'encoche dans la première cavité. La protubérance peut être d'une pièce avec la première partie ou peut être une pièce rapportée.

Selon un mode de réalisation, la première cavité comprend un système de verrouillage agencé pour bloquer la batterie au moins partiellement dans la première cavité, et, préférentiellement, un système d'éjection agencé pour exercer une force aidant à sortir la batterie de la première cavité. Le système de verrouillage est préférentiellement à commande électronique. Il est préférentiellement commandé à distance. Le verrouillage de la batterie au cadre permet d'éviter le vol de la batterie. L'utilisateur peut la déverrouiller, préférentiellement à distance, par exemple pour la prendre afin de la recharger.

Selon un mode de réalisation, la première partie comprend une partie d'un mécanisme de réglage et serrage de hauteur de selle.

Selon un mode de réalisation, le cadre comprend une pièce de fixation fixée dans un logement de la première partie et agencée pour recevoir un phare, par exemple un phare avant ou arrière.

L'invention propose en outre un vélo comprenant un cadre ou une pièce selon un mode de réalisation de l'invention.

Selon un mode de réalisation, le vélo comprend en outre une batterie agencée pour être reçue, au moins partiellement, dans la première cavité, et ayant une poignée mobile agencée pour prendre une première position dans laquelle la poignée mobile est contre la batterie, et une deuxième position plus éloignée de la batterie de la première position, la première cavité étant prévue pour recevoir la batterie avec la poignée mobile dans la première position, et étant préférentiellement agencée pour guider la poignée mobile de la deuxième position vers la première position lorsque batterie est insérée dans la première cavité.

L'invention propose en outre un procédé de montage d'une batterie sur un vélo à assistance électrique, et comprenant les étapes suivantes :
- fournir un vélo selon l'invention,
- insérer une batterie dans la première cavité de façon à ce qu'elle soit connectée électriquement au groupe motopropulseur.

L'invention propose en outre un procédé de fabrication par moulage d'une pièce de cadre selon l'invention.

### Brève description des figures

D'autres caractéristiques et avantages de l'invention apparaîtront à la lecture de la description détaillée qui suit pour la compréhension de laquelle on se reportera aux figures annexées parmi lesquelles :
La figure 1 illustre un exemple de vélo ayant un cadre et une batterie selon l'invention.
La figure 2 est une vue explosée montant les première et deuxième parties de cadre dans un mode de réalisation de l'invention.
Les figures 3, 4 et 5 illustrent la batterie en cours d'insertion dans le cadre.
La figure 6 est un agrandissement d'une partie de la figure 4.
La figure 7 illustre une pièce plastique prévue pour recevoir un phare arrière.
Les figures 8a à 8d illustrent différents profils de la pièce et de la deuxième partie du cadre.
La figure 9 illustre un procédé de fabrication d'un cadre de vélo selon un mode de réalisation de l'invention.

### Modes de réalisation de l'invention

La présente invention est décrite avec des réalisations particulières et des références à des figures mais l'invention n'est pas limitée par celles-ci. Les dessins ou figures décrits ne sont que schématiques et ne sont pas limitants. En outre, les fonctions décrites peuvent être réalisées par d'autres structures que celles décrites dans le présent document.

Dans le contexte du présent document, les termes « premier » et « deuxième » servent uniquement à différencier les différents éléments et n'impliquent pas d'ordre entre ces éléments.

Sur les figures, les éléments identiques ou analogues peuvent porter les mêmes références.

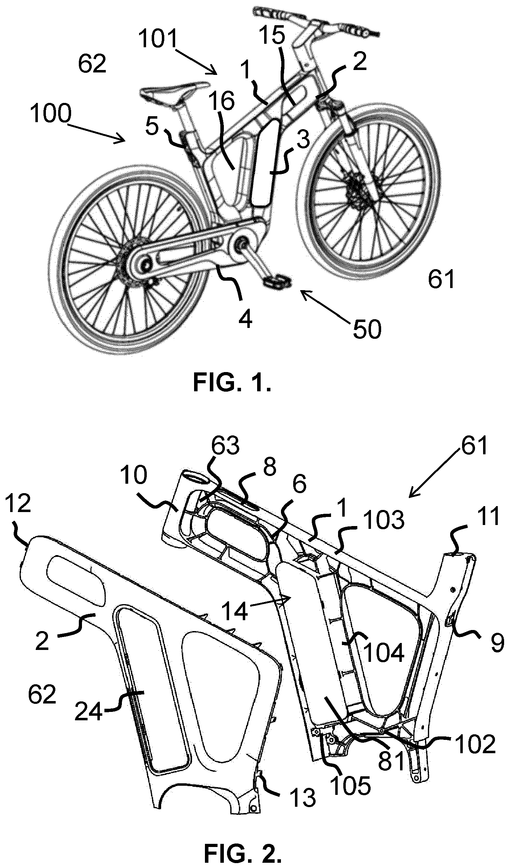

La figure 1 illustre un vélo 100 pourvu d'un cadre 101 selon une mode de réalisation de l'invention. Le cadre 101 comprend une pièce qui est une première partie 1 du cadre 101, et il comprend une deuxième partie 2. Le vélo 100 est un vélo à assistance électrique, ou vélo électrique, et il comprend un groupe motopropulseur 50 incluant l'axe de pédalier et une batterie 3 permettant d'alimenter le groupe motopropulseur 50 et éventuellement d'autres composants. Le groupe motopropulseur 50 est préférentiellement situé dans mono-bras structurel 4 qui relie la première partie 1 du cadre à l'axe de la roue arrière.

Le cadre 101 peut en outre comprendre une pièce de fixation 5, en plastique, permettant de fixer un phare arrière à la première partie du cadre 1. Cette pièce de fixation 5 peut avoir les mêmes couleurs et apparence que le reste du cadre, permettant de constituer un tout homogène et indissociable visuellement. Cette pièce peut également être colorée d'une manière à jouer avec les contrastes de couleurs du vélo.

Le cadre 101 est préférentiellement traversé latéralement par une cavité avant 15 et une cavité arrière 16. Le cadre 101 et la pièce qui est sa première partie 1 ont un premier côté 61 et un deuxième côté 62.

La figure 2 illustre les première 1 et deuxième 2 parties du cadre selon un mode de réalisation de l'invention. La première partie 1 est creuse : elle comprend de nombreuses cavités 63. Elle est pourvue de nervures 6 augmentant sa rigidité. Ces nervures ont été dimensionnées afin de garantir une rigidité répondant aux besoins et standard d'un cadre de vélo à assistance électrique, tout en minimisant l'ajout de masse nécessaire à ces contraintes.

La première partie 1 comprend un premier passage 11 prévu pour être traversé par un tube de selle, un deuxième passage 10 prévu pour être traversé par un tube de direction, et une partie d'interface 102 avec le groupe motopropulseur 50, qui comprend des éléments 105 pour fixer ce dernier et un passage pour connecter électriquement la batterie 3 et le groupe motopropulseur 50. Le tube de direction fait partie de la fourche qui couple la roue avant au cadre via des roulements, et au guidon via la potence. La deuxième partie 2 est agencée de façon à recouvrir partiellement le groupe motopropulseur 50.

La première partie 1 comprend une première cavité 14 débouchant sur le premier côté 61 du cadre 101 prévue pour recevoir partiellement une batterie 3 pour alimenter le groupe motopropulseur 50. La figure 2 permet de voir la paroi de fond 81 de la première cavité 14, qui peut dépasser vers le deuxième côté 62, en passant par un trou 24 de la deuxième partie 2.

La première partie 1 comprend préférentiellement une partie supérieure 103 reliant le premier passage 11 et le deuxième passage 10, et une partie transverse 104 reliant la partie supérieure 103 à la partie d'interface 102 avec le groupe motopropulseur 50. La première cavité 14 est préférentiellement située dans la partie transverse 104.

La première partie 1 comprend une ouverture 8 situé dans la partie supérieure 103. Il favorise le passage d'ondes électromagnétiques et permet ainsi le transfert d'information entre le vélo et son environnement. Cette ouverture 8 permet également de transmettre des informations visuelles à l'utilisateur par la présence par exemple de diodes lumineuses indiquant l'activation d'un système d'alarme ou un état quelconque du vélo. La première partie 1 comprend préférentiellement une cavité formant un logement 9 pour la pièce de fixation 5.

La deuxième partie 2 s'assemble facilement avec la première partie grâce à un système de clips plastiques 12 et de vis 13. Un motif et une texture peuvent leur être ajoutés, par exemple identiques à celui de la batterie 3, à des fins de symétrie et d'esthétisme.

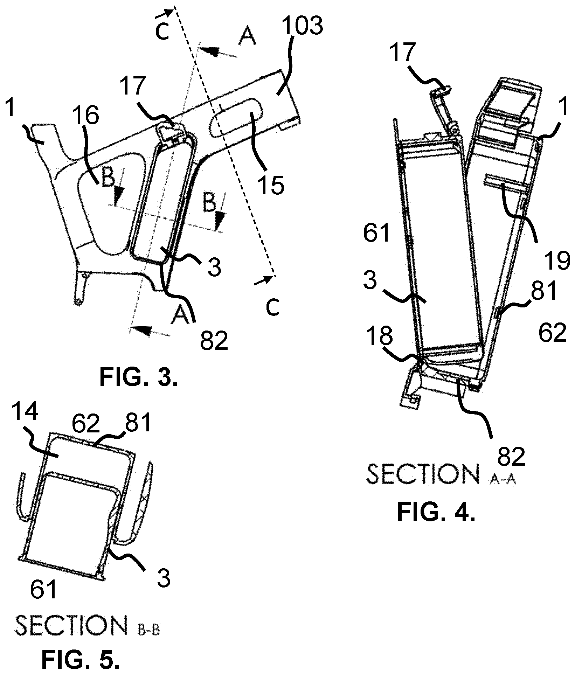

Les figures 3 à 6 illustrent le processus d'insertion de la batterie 3 dans la première cavité 14 du cadre. La batterie 3 comprend une poignée mobile 17 relevée à la figure 3 (deuxième position de la poignée 17) et qui sera pivotée contre la partie supérieure de la batterie 3 (première position de la poignée 17) lors de l'insertion. Les figures 4, 5, et 6 sont les vues en coupe de la figure 3.

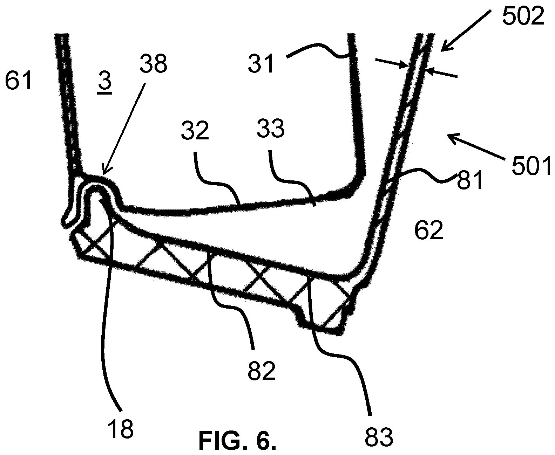

Le procédé d'insertion de la batterie 3 est rendu extrêmement intuitif grâce à la conception de la première partie 1 du cadre. Dans un mouvement initial, l'utilisateur n'a qu'à placer la partie inférieure de la batterie 3 à n'importe quelle hauteur de la première cavité 14. Cette manipulation est facilitée par la poignée mobile 17 qui se relève (c'est-à-dire se met en deuxième position) automatiquement lorsque la batterie 17 est hors de la première cavité 14. Une fois que la batterie 3 entre en contact avec une des parois latérales ou de fond 81 de la première cavité 14, elle descend, par l'action de la gravité. Elle se place alors de façon à ce qu'une encoche 38, prévue dans sa paroi inférieure 32, reçoive une protubérance 18 située sur la paroi inférieure 82 de la première cavité 14, et prévue pour que la batterie 3 puisse pivoter vers la paroi de fond 81 de la première cavité 14 lorsque la protubérance 18 est dans l'encoche 38. Ainsi, la batterie 3 entame une rotation dont le centre est déporté vers l'entrée de la première cavité 14. Grâce à ce déport, le poids de la batterie 3 fait en sorte que celle-ci soit entrainée vers l'intérieur de la première cavité 14. La référence 83 à la figure 6 indique une position préférée pour des connecteurs mâles de contact électrique, prévues pour rentrer dans des connecteurs femelles situés sur la batterie 3 au niveau de la référence 33.

La forme de la première cavité 14 et de la poignée 17 de la batterie ont été étudiées pour que lors de son insertion, la poignée 17 soit repliée vers son logement, sans entrave à la procédure d'insertion de la batterie 3. L'utilisateur est alors juste amené à terminer les derniers degrés de rotation pour engager le système de verrouillage de la batterie 3. La forme des parois de la première cavité 14 a été étudiée pour accepter l'insertion de la batterie 3 selon une grande plage d'angles et de positions pour faciliter au maximum le travail de l'utilisateur. L'extraction de la batterie 3 est facilitée par l'utilisation d'un système de verrouillage électronique ne nécessitant aucune clef et par un système d'éjection 19 comprenant un ressort qui fait pivoter la batterie 3 vers l'extérieur pour la présenter à l'utilisateur et déployer la poignée.

La figure 4 illustre la batterie 3 pendant son mouvement de rotation autour de la protubérance 18, lors de son insertion dans la première partie 1 du cadre. L'insertion de la batterie 3 par l'utilisateur est composée des étapes suivantes :
1) L'utilisateur insère la batterie 3 dans la première cavité 14. La batterie 3 est guidée dans son mouvement de pivot par la protubérance 18 dans la première cavité 14. En outre, ce mouvement est rendu aisé par la position inclinée du vélo sur sa béquille présentant la première cavité 14 à l'utilisateur, et par la gravité aidant l'utilisateur lors du glissement de la batterie 3 dans sa première cavité 14.
2) L'utilisateur, se servant éventuellement d'une main apposée contre la batterie 3 et de l'autre pour maintenir le cadre, entraine le mouvement de rotation de la batterie 3 dans le cadre 101. La batterie 3 pivote autour de la protubérance 18. Lorsque la poignée mobile 17 de la batterie 3 entre en contact avec la première partie 1, elle commence sa rotation vers sa première position en vue de son rangement sur la partie supérieure de la batterie 3
3) L'utilisateur vainc alors la force de rappel du mécanisme d'éjection 19 de la batterie 3 et, passé un certain point, la batterie 3 dépasse le système de verrouillage (non représenté) ; la batterie 3 est finalement insérée et bloquée dans la première partie du cadre 1 grâce au système de verrouillage. L'éjection de la batterie hors de la première partie cadre 1 se fait simplement en libérant le système de verrouillage, ce qui libère la batterie 3 de la première partie 1 en raison de la force exercée par le système d'éjection 19, par exemple un ressort.

Comme illustré figure 6, la paroi de fond 81 de la première cavité 14, qui ferme la cavité 14 du deuxième côté 62, comprend une partie de paroi 501 ayant une épaisseur 502 préférentiellement inférieure à 4 mm, plus préférentiellement inférieure à 3 mm.

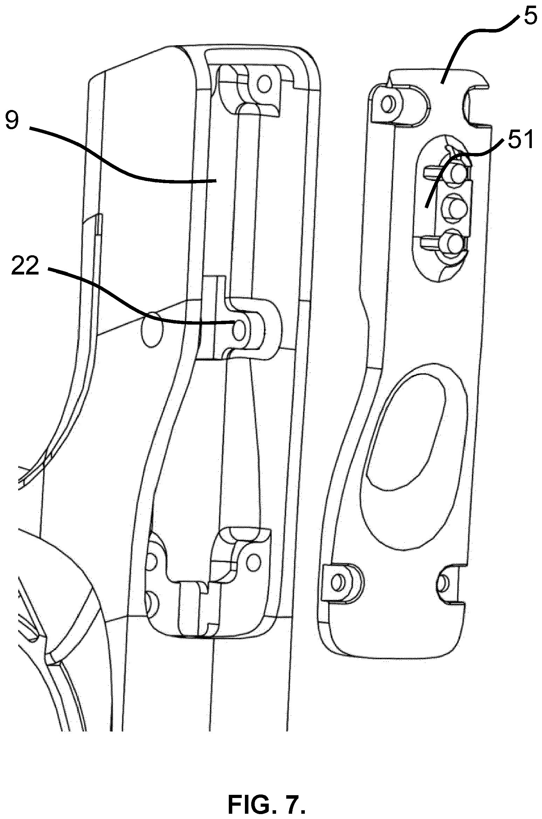

La figure 7 illustre comment la pièce de fixation 5 contenant le phare arrière est placée dans le logement 9 de la première partie 1 prévue à cet effet. De préférence, la pièce de fixation 5 comprend une cavité 51 prévue pour déboucher vers l'arrière, et trouée vers l'intérieur de cadre 101 de façon à pouvoir faire passer des fils d'alimentation électrique du phare arrière.

On peut aussi voir l'intégration d'une partie de mécanisme de serrage réglage et serrage de tube de selle 22 tel que décrit dans la demande de brevet belge BE2020/5428.

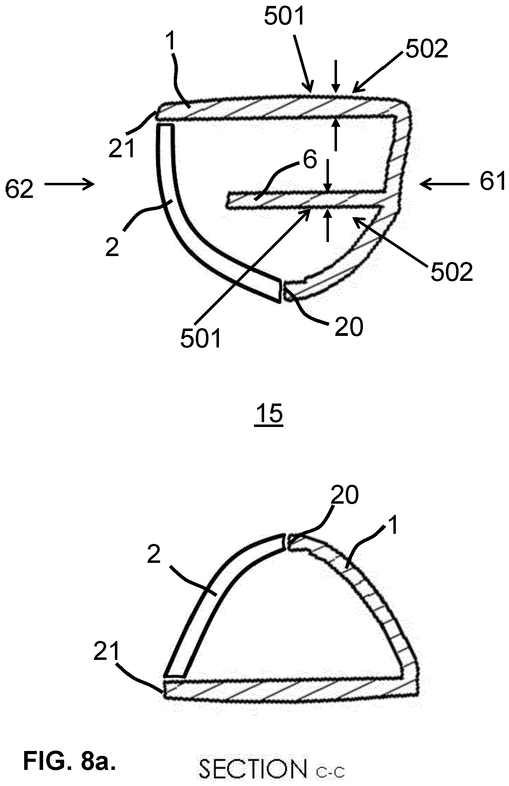

Les figures 8a à 8d sont des vues en coupe selon le plan CC montré figure 3 au niveau de la cavité avant 15, illustrant différents profils de la pièce qui est la première partie 1 du cadre, et de la deuxième partie 2. Les hachures de la deuxième partie 2 et de la troisième partie 300 ont été omises des figures.

La figure 8a illustre un profil en « C » de la pièce. On observe sur cette figure que la jonction entre la première 1 et la deuxième 2 parties se fait préférentiellement sur deux plans verticaux. Le premier plan 20 se trouve sur le plan de symétrie du vélo et permet de reproduire le profil courbé de la première partie 1 en symétrie sur la deuxième partie 2. Le deuxième plan 21 permet la jonction des pièces par recouvrement interne de la deuxième partie 2 sur la première partie 1. On observe aussi une nervure 6 présente pour rigidifier la structure. La figure 8a illustre aussi deux positions possibles de la partie de paroi 501 ayant une épaisseur 502 de moins de 3 mm : sur la partie supérieure 103 et/ou sur une des nervures 6.

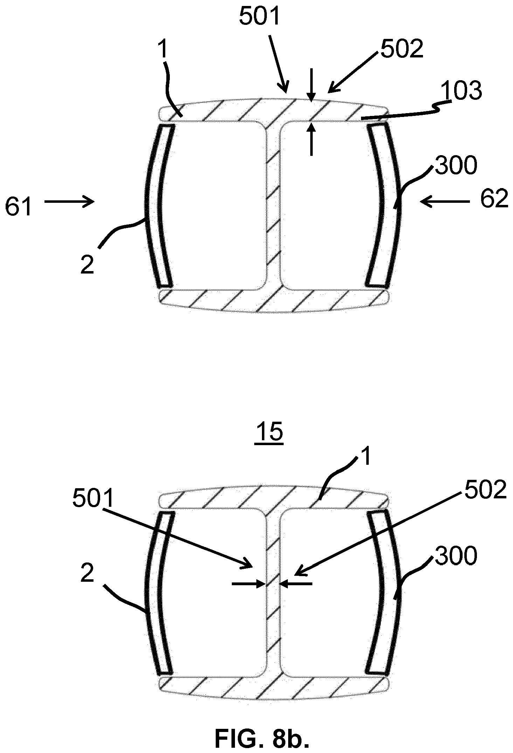

La figure 8b illustre un profil en « H » de la pièce, la deuxième partie 2 située du deuxième côté 62 du cadre et une troisième partie 300 du cadre située du premier côté 61 du cadre.

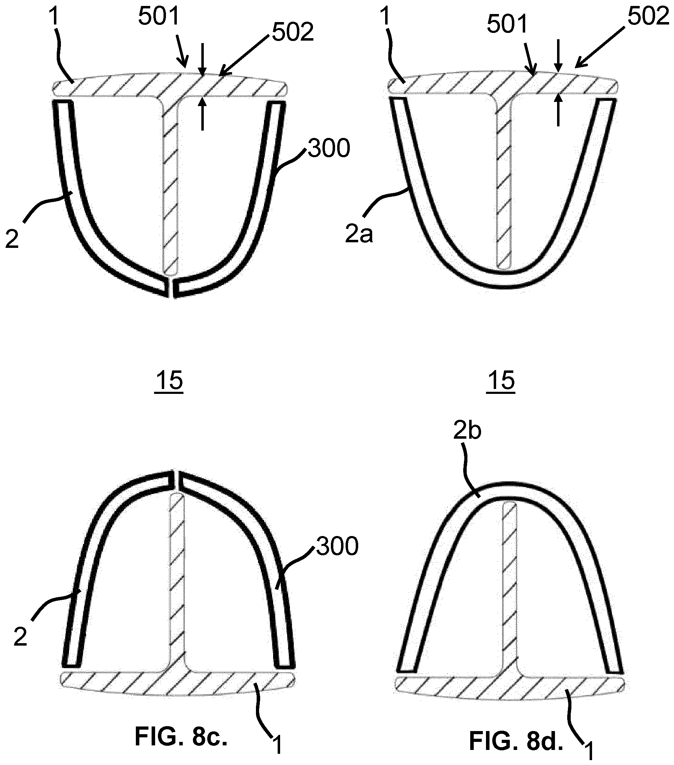

La figure 8c illustre un profil en « T » de la pièce, la deuxième partie 2 située du deuxième côté 62 du cadre et une troisième partie 300 du cadre située du premier côté 61 du cadre.

La figure 8d illustre un profil en « T » de la pièce, la deuxième partie 2 située du premier côté 61 et du deuxième côté 62 du cadre. La deuxième partie 2 comprend deux pièces distinctes 2a et 2b.

Le mode de réalisation préféré de l'invention peut être décrit de la façon suivante. La première partie 1 est issue, en une pièce, d'un procédé de moulage et est constituée d'un matériau métallique permettant ce mode de fabrication, comme un alliage de magnésium par exemple. La conception de la première partie 1 a été réalisée en tenant compte des particularités du procédé de moulage par injection des métaux (die casting). La première partie 1 est formée de différents profils creux permettant de contenir de l'électronique embarquée et a été optimisée afin de réduire au maximum le poids du cadre tout en permettant une rigidité suffisante, par l'emploi de nervures 6, pour répondre aux tests standards d'un cadre de vélo à assistance électrique. La partie supérieure 103 de la première partie 1 contient une ouverture 8 dont le but est de favoriser le passage d'ondes électromagnétiques vers l'extérieur du cadre, pour par exemple un échange de données GPS. La première partie 1 est contient également une première cavité 14 latérale permettant l'insertion de la batterie 3 en son sein par un mouvement de rotation autour d'un coin 18 formant un profil de contact entre la batterie 3 et la première partie 1. La batterie contient une poignée mobile 17 se présentant à l'utilisateur lors de l'éjection de la batterie grâce par exemple à l'utilisation d'une pièce élastique ou un ressort. Dans la conception de la première partie 1 ont été prévues différentes interfaces permettant la fixation de plusieurs éléments, notamment : un baffle ; un système de verrouillage de la batterie à l'intérieur du cadre réalisé par exemple à l'aide d'une serrure électromagnétique ; un système d'éjection 19 de la batterie 3 grâce par exemple à un ressort ; le système de fixation du phare arrière du vélo 9 ; l'interface de fixation du moteur 105; le maintien des roulements de direction ; une partie du mécanisme de réglage et serrage de hauteur de selle 22; des fixations pour porte bagage à l'arrière et porte paquet à l'avant ; les gaines de freins et câbles passants à travers le cadre, ainsi que des logements et points de fixations prévus pour attacher d'autres éléments électroniques.

La deuxième partie 2 est fixée sur la première partie 1 par un moyen d'assemblage tel que des clips 12, 13 ou des pas de vis. La deuxième partie 2 pourrait être issue d'un procédé d'injection plastique. Elle peut également être utilisée comme pièce décorative en employant par exemple un contraste de couleur par rapport à la couleur de la première partie.

A part aux contours des cavités 15 et 16 présentes sur les deux parties, le plan de jonction des deux parties est le plan 21 qui est situé à l'extrémité gauche du cadre du vélo, permettant de maximiser la hauteur des murs extérieurs de la première partie afin d'augmenter sa rigidité. La jonction des deux parties se fait à ces endroits, par recouvrement interne de la deuxième partie 2 sous la première partie 1. Autour des ouvertures 15 et 16, les deux parties se joignent dans le plan de symétrie du vélo 20 par deux profils courbés symétriques. Ceci permet l'aspect arrondi du cadre à ces endroits sans avoir besoin d'augmenter de façon considérable l'épaisseur de paroi de la première partie en raison du procédé de moulage des métaux utilisé.

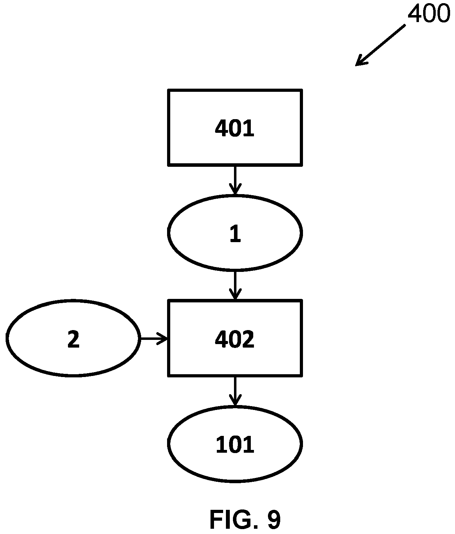

La figure 9 illustre un procédé 400 de fabrication d'un cadre 101 de vélo selon un mode de réalisation de l'invention. Le procédé commence par le moulage de la première partie 1, par injection 401, avec préférentiellement une pression d'au moins 10 MPa. Ensuite, la deuxième partie 2 est fixée 402 à la première partie 1 de façon à la fermer, au moins partiellement, sur le deuxième côté 62. L'assemblage de la première 1 et la deuxième 2 parties forme le cadre 101.

En d'autres termes, l'invention se rapporte à une pièce formant une première partie 1 un cadre 101 pour vélo 100 à assistance électrique et à son procédé de fabrication par injection métallique. La pièce est moulée d'un seul tenant, et confère sa structure au cadre 101. Elle a une partie de paroi ayant une épaisseur de moins de 4 mm. La pièce comprend une première cavité 14 agencée pour recevoir une batterie 3 permettant d'alimenter le groupe motopropulseur 50 du vélo.

La présente invention a été décrite en relation avec des modes de réalisation spécifiques, qui ont une valeur purement illustrative et ne doivent pas être considérés comme limitatifs.

## Revendications

1. Procédé de fabrication d'une pièce pour cadre (101) pour vélo (100) à assistance électrique équipé d'un groupe motopropulseur (50) incluant un axe de pédalier, la pièce ayant un premier côté (61) et un deuxième côté (62) opposé au premier côté (61), la pièce étant une première partie (1) dudit cadre (101), et qui comprend:
• un premier passage (11) prévu pour être traversé par un tube de selle,
• un deuxième passage (10) prévu pour être traversé par un tube de direction,
• une partie d'interface (102) avec le groupe motopropulseur (50), et
• une première cavité (14) ouverte sur au moins un des côtés (61, 62) de la pièce et prévue pour recevoir au moins partiellement une batterie (3) pour alimenter le groupe motopropulseur (50) ;
**caractérisé en ce que** le procédé de fabrication est un procédé de moulage par injection métallique (401), et **en ce que** la pièce est moulée d'une pièce et a une partie de paroi (501) ayant une épaisseur (502) de moins de 4 mm.

2. Procédé selon la revendication 1, dans lequel l'épaisseur (502) est de moins de 3 mm.

3. Procédé selon l'une quelconque des revendications précédentes, dans lequel la pièce comprend une paroi de fond (81) fermant, au moins partiellement, la première cavité (14) du deuxième côté (62).

4. Procédé selon l'une quelconque des revendications précédentes, dans lequel le moulage par injection est réalisé avec une pression d'au moins 10 MPa.

5. Pièce pour cadre (101) pour vélo (100) à assistance électrique équipé d'un groupe motopropulseur (50) incluant un axe de pédalier, la pièce ayant un premier côté (61) et un deuxième côté (62) opposé au premier côté (61), la pièce étant une première partie (1) dudit cadre (101), et qui comprend:
• un premier passage (11) prévu pour être traversé par un tube de selle,
• un deuxième passage (10) prévu pour être traversé par un tube de direction,
• une partie d'interface (102) avec le groupe motopropulseur (50), et
• une première cavité (14) ouverte sur au moins un des côtés (61, 62) de la pièce et prévue pour recevoir au moins partiellement une batterie (3) pour alimenter le groupe motopropulseur (50) ;
**caractérisée en ce que** la pièce est métallique, est moulée d'une pièce et a une partie de paroi (501) ayant une épaisseur (502) de moins de 4 mm.

6. Pièce selon la revendication précédente, dans laquelle l'épaisseur (502) est de moins de 3 mm.

7. Pièce selon l'une quelconque des revendications 5 à 6, comprenant une paroi de fond (81), au moins partiellement, fermant la première cavité (14) du deuxième côté (62).

8. Pièce selon l'une quelconque des revendications 5 à 7, dans laquelle la première partie (1) comprend un trou (8) agencé pour faciliter un passage d'ondes électromagnétiques vers des composants électroniques situés dans le cadre (101).

9. Cadre (101) comprenant une pièce selon l'une quelconque des revendications 5 à 8 et une deuxième partie (2) agencée pour fermer au moins partiellement, la première partie (1) sur le deuxième côté (62).

10. Cadre selon la revendication précédente, dans lequel la première cavité (14) est ouverte du premier côté (61).

11. Cadre selon l'une quelconque des revendications 9 à 10, comprenant en outre un système de verrouillage à commande électronique agencé pour bloquer la batterie (3) au moins partiellement dans la première cavité (14), et préférentiellement, un système d'éjection (19) agencé pour exercer une force aidant à sortir la batterie (3) de la première cavité (14).

12. Cadre selon l'une quelconque des revendications 9 à 11, dans lequel la première partie (1) comprend une partie d'un mécanisme de réglage et serrage de hauteur de selle (22).

13. Cadre selon l'une quelconque des revendications 9 à 12, comprenant en outre une pièce de fixation (5) fixée dans un logement (9) de la première partie (1) et agencée pour recevoir un phare.

14. Vélo comprenant un cadre (1) selon l'une quelconque des revendications 9 à 13, ou une pièce selon l'une quelconque des revendications 5 à 8.

15. Vélo selon la revendication précédente, comprenant en outre une batterie (3) agencée pour être reçue, au moins partiellement, dans la première cavité (14), et ayant une poignée mobile (17) agencée pour prendre une première position dans laquelle la poignée mobile (17) est contre la batterie (3), et une deuxième position plus éloignée de la batterie (3) de la première position, la première cavité (14) étant prévue pour recevoir la batterie (3) avec la poignée mobile (17) dans la première position, et étant préférentiellement agencée pour guider la poignée mobile (17) de la deuxième position vers la première position lorsque batterie (3) est insérée dans la première cavité (14).

## Patentansprüche

1. Verfahren zur Herstellung eines Stücks für einen Rahmen (101) für ein Fahrrad (100) mit elektrischer Unterstützung, das mit einem Antriebsstrang (50) ausgestattet ist, der eine Tretlagerachse beinhaltet, wobei das Stück eine erste Seite (61) und eine der ersten Seite (61) gegenüberliegende zweite Seite (62) aufweist, wobei das Stück ein erster Teil (1) des Rahmens (101) ist, und Folgendes umfasst:
- einen ersten Durchgang (11), der dafür vorgesehen ist, von einem Sattelrohr durchquert zu werden,
- einen zweiten Durchgang (10), der dafür vorgesehen ist, von einem Lenkrohr durchquert zu werden,
- einen Schnittstellenteil (102) zum Antriebsstrang (50), und
- einen ersten Hohlraum (14), der auf mindestens einer der Seiten (61, 62) des Stücks offen und dafür vorgesehen ist, eine Batterie (3) zur Versorgung des Antriebsstrangs (50) mindestens teilweise aufzunehmen;
**dadurch gekennzeichnet, dass** das Herstellungsverfahren ein Metallspritzgussverfahren (401) ist, und dadurch, dass das Stück einstückig gegossen ist und einen Wandteil (501) aufweist, der eine Dicke (502) von weniger als 4 mm aufweist.

2. Verfahren nach Anspruch 1, wobei die Dicke (502) weniger als 3 mm beträgt.

3. Verfahren nach einem der vorstehenden Ansprüche, wobei das Stück eine Bodenwand (81) umfasst, die den ersten Hohlraum (14) auf der zweiten Seite (62) mindestens teilweise verschließt.

4. Verfahren nach einem der vorstehenden Ansprüche, wobei das Spritzgießen mit einem Druck von mindestens 10 MPa ausgeführt wird.

5. Rahmenstück (101) für ein Fahrrad (100) mit elektrischer Unterstützung, das mit einem Antriebsstrang (50) ausgestattet ist, der eine Tretlagerachse beinhaltet, wobei das Stück eine erste Seite (61) und eine der ersten Seite (61) gegenüberliegende zweite Seite (62) aufweist, wobei das Stück ein erster Teil (1) des Rahmens (101) ist, und Folgendes umfasst:
- einen ersten Durchgang (11), der dafür vorgesehen ist, von einem Sattelrohr durchquert zu werden,
- einen zweiten Durchgang (10), der dafür vorgesehen ist, von einem Lenkrohr durchquert zu werden,
- einen Schnittstellenteil (102) zum Antriebsstrang (50), und
- einen ersten Hohlraum (14), der auf mindestens einer der Seiten (61, 62) des Stücks offen und dafür vorgesehen ist, eine Batterie (3) zur Versorgung des Antriebsstrangs (50) mindestens teilweise aufzunehmen;
**dadurch gekennzeichnet, dass** das Stück aus Metall ist, einstückig gegossen ist und einen Wandteil (501) aufweist, der eine Dicke (502) von weniger als 4 mm aufweist.

6. Stück nach dem vorstehenden Anspruch, wobei die Dicke (502) weniger als 3 mm beträgt.

7. Stück nach einem der Ansprüche 5 bis 6, das eine Bodenwand (81) umfasst, die den ersten Hohlraum (14) auf der zweiten Seite (62) mindestens teilweise verschließt.

8. Stück nach einem der Ansprüche 5 bis 7, wobei der erste Teil (1) ein Loch (8) umfasst, das so eingerichtet ist, dass es einen Durchtritt von elektromagnetischen Wellen zu elektronischen Bauteilen, die sich im Rahmen (101) befinden, erleichtert.

9. Rahmen (101), der ein Stück nach einem der Ansprüche 5 bis 8 und einen zweiten Teil (2) umfasst, der so eingerichtet ist, dass er den ersten Teil (1) auf der zweiten Seite (62) mindestens teilweise verschließt.

10. Rahmen nach dem vorstehenden Anspruch, wobei der erste Hohlraum (14) auf der ersten Seite (61) offen ist.

11. Rahmen nach einem der Ansprüche 9 bis 10, der weiter ein elektronisch gesteuertes Verriegelungssystem, das so eingerichtet ist, dass es die Batterie (3) mindestens teilweise im ersten Hohlraum (14) arretiert, und vorzugsweise ein Auswurfsystem (19) umfasst, das so eingerichtet ist, dass es eine Kraft ausübt, die hilft, die Batterie (3) aus dem ersten Hohlraum (14) herauszuholen.

12. Rahmen nach einem der Ansprüche 9 bis 11, wobei der erste Teil (1) einen Teil eines Einstell- und Festspannmechanismus für die Sattelhöhe (22) umfasst.

13. Rahmen nach einem der Ansprüche 9 bis 12, der weiter ein Befestigungsteil (5) umfasst, das in einer Aufnahme (9) des ersten Teils (1) befestigt und so eingerichtet ist, dass es einen Scheinwerfer aufnimmt.

14. Fahrrad, das einen Rahmen (1) nach einem der Ansprüche 9 bis 13 oder ein Stück nach einem der Ansprüche 5 bis 8 umfasst.

15. Fahrrad nach dem vorstehenden Anspruch, das weiter eine Batterie (3) umfasst, die so eingerichtet ist, dass sie mindestens teilweise in dem ersten Hohlraum (14) aufgenommen wird, und einen beweglichen Griff (17) aufweist, der so eingerichtet ist, dass er eine erste Position, in der sich der bewegliche Griff (17) an der Batterie (3) befindet, und eine zweite Position, die weiter von der Batterie (3) entfernt ist als die erste Position, einnimmt, wobei der erste Hohlraum (14) dafür vorgesehen ist, die Batterie (3) mit dem beweglichen Griff (17) in der ersten Position aufzunehmen, und vorzugsweise so eingerichtet ist, dass er den beweglichen Griff (17) aus der zweiten Position in die erste Position führt, wenn die Batterie (3) in den ersten Hohlraum (14) eingesetzt wird.

## Claims

1. Method for manufacturing a piece for power-assisted bicycle (100) frame (101) equipped with a motive power unit (50) including a bottom-bracket spindle, the piece having a first side (61) and a second side (62) opposite the first side (61), the piece being a first part (1) of said frame (101), and which comprises:
• a first passage (11) provided to be passed through by a saddle tube,
• a second passage (10) provided to be passed through by a directing tube,
• an interface part (102) with the motive power unit (50), and
• a first cavity (14) open on at least one of the sides (61, 62) of the piece and provided to receive at least partially a battery (3) to power the motive power unit (50);
**characterized in that** the manufacturing method is a metal injection molding method (401), and **in that** the piece is one-piece molded and has a wall part (501) having a thickness (502) of less than 4 mm.

2. Method according to claim 1, wherein the thickness (502) is less than 3 mm.

3. Method according to any one of the preceding claims, wherein the piece comprises a bottom wall (81) closing, at least partially, the first cavity (14) of the second side (62).

4. Method according to any one of the preceding claims, wherein the injection molding is done with a pressure of at least 10 MPa.

5. Piece for power-assisted bicycle (100) frame (101) equipped with a motive power unit (50) including a bottom-bracket spindle, the piece having a first side (61) and a second side (62) opposite the first side (61), the piece being a first part (1) of said frame (101), and which comprises:
• a first passage (11) provided to be passed through by a saddle tube,
• a second passage (10) provided to be passed through by a directing tube,
• an interface part (102) with the motive power unit (50), and
• a first cavity (14) open on at least one of the sides (61, 62) of the piece and provided to receive at least partially a battery (3) to power the motive power unit (50);
**characterized in that** the piece is metallic, is one-piece molded and has a wall part (501) having a thickness (502) of less than 4 mm.

6. Piece according to the preceding claim, wherein the thickness (502) is less than 3 mm.

7. Piece according to any one of claims 5 to 6, comprising a bottom wall (81), at least partially, closing the first cavity (14) of the second side (62).

8. Piece according to any one of claims 5 to 7, wherein the first part (1) comprises a hole (8) arranged to facilitate a passage of electromagnetic waves to electronic components located in the frame (101).

9. Frame (101) comprising a piece according to any one of claims 5 to 8 and a second part (2) arranged to close at least partially, the first part (1) on the second side (62).

10. Frame according to the preceding claim, wherein the first cavity (14) is open from the first side (61).

11. Frame according to any one of claims 9 to 10, further comprising an electronic control locking system arranged to block the battery (3) at least partially in the first cavity (14), and preferably, an ejection system (19) arranged to exert a force assisting with exiting the battery (3) from the first cavity (14).

12. Frame according to any one of claims 9 to 11, wherein the first part (1) comprises a part of a mechanism for adjusting and clamping the saddle (22) height.

13. Frame according to any one of claims 9 to 12, further comprising a fixing part (5) fixed in a housing (9) of the first part (1) and arranged to receive a light.

14. Bicycle comprising a frame (1) according to any one of claims 9 to 13, or a piece according to any one of claims 5 to 8.

15. Bicycle according to the preceding claim, further comprising a battery (3) arranged to be received, at least partially, in the first cavity (14), and having a mobile handle (17) arranged to take a first position wherein the mobile handle (17) is against the battery (3), and a second position farther from the battery (3) of the first position, the first cavity (14) being provided to receive the battery (3) with the mobile handle (17) in the first position, and being preferably arranged to guide the mobile handle (17) from the second position to the first position when the battery (3) is inserted in the first cavity (14).
